# EUROPEAN PATENT APPLICATION

(11) **EP 2 333 710 A1**
(43) Date of publication of application: **15.06.2011**
(21) Application number: 09382270.8
(22) Date of filing: 04.12.2009
(51) Int. Cl.: G06Q 30/00

(54) **System and Method for promoting customer loyality via the mobile telephone**

(71) Applicant: Flash2flash Digital, S.L., 28013 Madrid (ES)
(72) Inventor: Riesco Martin, Ignacio, 28013 Madrid (ES); Gerosa, Vittorio, 28013 Madrid (ES); Colmenares Serra, Alonso, 28013 Madrid (ES)
(74) Representative: Temino Ceniceros, Ignacio

(57) **Abstract**

A customer loyalty system via mobile phone comprising a client application, installed in the client's or user's mobile phone (1), a system based on a series of clusterised redundant servers, with high availability, in charge of storing the transactions made by the client and controlling, managing and sending promotions, savings cheques, and commercial communications to the clients registered in the customer loyalty system, as well as storing, managing, processing and validating all relevant information (purchasing data, visits made, redemptions made, points accumulated, etc.), and numerous scanners located in trading premises enabled for usage of the system, all these elements being configured for identifying and obtaining a series of bonuses on the part of the user (1).

## Description

The object of the present invention is a system and method for promoting customer loyalty via the mobile telephone, as a communication and transaction system for CRM (customer relationship management) system s and is based on the accumulation of points for a purchase or visit generated to a premises via mobile phone, as well as the sending of different types of promotions, discounts and other kind of sales information to a particular client's mobile telephone, with an aim to generating and processing the necessary information to establish and reinforce lasting relations between the business and the client, in a way similar to what occurs with "physical" customer loyalty cards.

The present invention relates to the field of systems for processing data especially adapted for commercial purposes.

### Background to the invention

The mobile phone has a far higher participation rate than other media as it allows the entire population to participate from anywhere. This enables the user to intervene "live" in the commercial relation from the point of sale itself, thus raising response ratios.

Among the different systems described in the status of the technique, document WO2007132298 describes a system and method for gaining customer loyalty which avails of the mobile phone and includes the different stages involving offering goods and services for their sale by telephone, transmitting loyalty rewards from the seller's communications network to the buyer's communications network. This system sends a coupon as a reward for customer loyalty, through a wireless network, to a wireless device, such as a mobile phone, a magnetic card or a credit card, which processes the redemption of the coupon through a mobile phone, a computer or a card reader at the point of sale, by entering the telephone number or an associated number in the redemption system. In general, the customer is registered in a website and the system sends a coupon to the user's mobile phone which can be redeemed in a store. However, it does not detail what this exchange involves.

Document US2009/0156180 describes the different techniques for making electronic cards which can be displayed on a mobile phone. These techniques are based on a random SMS message and the creation of an electronic card in the mobile telephone corresponding to a pre-existing non-electronic card such as, for example, a loyalty card.

Document US2008/0255942 describes a virtual device and method for loyalty cards and rewards or gifts, wherein subscribers gain access to discount coupons, gift codes and cards. Nevertheless, this document does not speak of customer loyalty, or of the particular applications necessary, or of how the redemption is made, or of redemption codes, nor other fundamental details necessary for developing a system like the one described in the present document.

Last of all, document US2006/0265281 describes a system for facilitating the use of discount coupons via mobile phone for their electronic presentation and processing, involving the existence of a register of online consumers liable for membership and thus able to receive a card associated with a unique identifier. The website enables the storage of the coupons in the card, selecting such electronic coupons as, once published, are of interest to the user. It is important to point out that the coupons are not actually stored in the same card, but rather the store's checkout system identifies the ID or account number associated with the card, accesses the system database, reads which coupons are empty and applies the appropriate discount to the items purchased. In short, it is a website from which a person accesses a series of coupons which, in order to be redeemed, must pass through a magnetic card in a specific store, which connects with an external database.

### Description of the invention

In a first aspect of the invention, a customer loyalty via mobile phone system comprises a client application installed in the customer's or user's mobile phone and a server element based on a series of clusterised, redundant servers, with high availability, in charge of storing the transactions made by the client (purchases made, visits to the different shopping centres, accumulation of points...) apart from controlling, managing and sending the updates and commercial data to the said clients or users, as well as multiple scanners located in shopping centres enabled for the use of the system wherein the client application is installed in the user's mobile, and configured for the identification of the customer or user, for the accumulation of points and to allow multiple promotional offers and/or commercial communications to be loaded through the different versions of the same client application in order to be able to reach all kinds of mobile phones: i) non-invasive SMS messages, since they are not redirected to the mobile phone inbox, but are rather stored in the client application itself, due to the fact that these messages are sent through a specific port of the mobile terminal, and ii) through a query by the client application to the server element in http connection, both systems comprising means for identifying the user through a unique card number and means for registering the purchasing data and the loading of promotions and/or savings cheques in a given commercial premises.

The server element is configured for storing and integrally managing the mobile customer loyalty card or client application, the client database and the server of said client applications for their downloading to the mobile phones of the clients or users of the system, the registration of the user's purchasing data, the storage of the accumulated points, as well as for sending the promotions, communications and discount coupons to the client application.

The system is configured so that once the client has made a visit to a commercial premises that implements the system, they will need to identify themselves in a scanner provided for the said purpose, their code being scanned and the visit made being registered in the client database, and wherein, for each *x* visits and/or purchases, the client will receive a bonus.

In a second aspect of the invention, the customer loyalty via mobile phone method implemented in the foregoing system comprises the following stages:
(a) a first stage involving the download of the client application by the user, with the completion of the activation form, so that the server stores the client information in the client database, subsequently sending the new configuration together with the initial promotion to the client application;
(b) once they visit a commercial premises implementing the system, they will need to identify themselves in a scanner provided for the said purpose, the user code being scanned (preferably in bidimensial barcode format), the visit made being registered in the client database, and wherein, for each *x* visits and/or *x* money spent, the client will receive a bonus in points as a reward for their loyalty;
(c) The client receives a series of promotions for variable time periods, preferably weeks, in their client application, wherein, for the redemption of said promotions, the client must scan the promotional code either in the scanner of the checkout, the value of the promotion being directly discounted, or at a station or kiosk, where the code will be scanned and a discount coupon or voucher which is exchangeable at the checkout will be printed; and
(d) wherein the savings cheque, a result of the amount of bonuses stored in their balance, receiving in exchange a savings cheque worth *x* euros, and wherein, for the redemption of these cheques, the client must scan the code identifying them once they have made a purchase, in the scanner located next to the checkout or with the coupon printed by a kiosk located for the said purpose in the premises.

The advantages of the system described above lie in competitive aspects such as the incentive implied for attracting clients, given that it is simple to use. Another aspect to be taken into account is the increase in the company's capacity to communicate with clients as it opens a direct channel with them (at any time, in any place) and the possibility to carry out direct marketing campaigns with the chance to measure the results online.

Another differentiating element with respect to other mobile systems that use 2D codes is that the different versions of the client application cover almost the entire range of the current number of mobile phones, which will facilitate adaptation to the future evolution of new developments of mobile platforms.

Another element to take into account is its effectiveness, control and the reduction of communication costs. Greater effectiveness because the mobile phone is a more segmentable and personal medium. Lower costs because the communication expenses for companies are reduced (in the case of the SMS version, to the cost of a SMS for each communication with the client, and, in the case of the http connection version, to zero).

Another advantage for companies, as in the case of large-scale distribution, is the possibility to sell this system to their advertisers, charging them a fee for impact and for redemption, with the result being entirely measurable for each user.

Another element to take into account is the advantage of the system when drawing up statistics, allowing the company to dispose of real time information on the sending, reception and redemption of promotions, coupons, savings cheques and communications by the client or user, according to trading premises, groups of premises, area, the number of active users, and on all the data on purchases, be they individual or grouped, of all clients registered in the customer loyalty system.

In the event that the system is connected with the checkout system and all the purchasing data are uploaded to the server, this would allow the last mile to be covered, in other words, it would allow for the optimisation of CRM thanks to the effectiveness of a more personalised, segmented, immediate and ubiquitous communication system with the user.

One clear advantage for the end user is the zero cost of the use of the application, in the case of the SMS version, except for when the client makes a request for, and downloads, the application, as well as when they request their balance, and also in the case of the http connection version, except for such clients as do not have a broadband connection, and who will consequently have to pay the cost of the connection with the server.

Another of the system's advantages is the flexibility of its in-store component, that is, its scanner reader system, which can be installed in the check-out system or externally as mobile readers or kiosks, offering an ad hoc solution to the companies contracting the service.

Likewise, a result of this is the immediacy effect the system provides in access and redemption of the coupons via the mobile phone, reducing the unused purchase coupons, and even only paying for those redeemed or depending on the results obtained. Similarly, the creation of the coupon may be automatic for the next purchase of a product in exchange for making a purchase.

Another of the system's advantages is the control procedure of the already redeemed codes, which implies that the system stores a code, be it a promotional code, a coupon code or a savings cheque code, once it has been scanned, with the result that, on the second attempt at validating, it will be declared "already redeemed" or "invalid".

Throughout the description and claims, the word "comprises" and its variants do not intend to exclude other technical characteristics, additives, components or steps. For the experts skilled in the art, other objects, advantages and characteristics of the invention will be understood in part from the description and in part from the practice of the invention. The following examples and drawings are provided by way of illustration and do not intend to limit the present invention. Moreover, the present invention covers all possible combinations or particular and preferred embodiments specified herein.

### Brief description of the drawings

- *FIG1.*: Shows a scheme for communication with the client in a request for both the download and registration of the application.
- *FIG2.*: Shows a scheme for communication with the client, in the sending of promotions, coupons, savings cheques and/or communications through SMS messages.
- *FIG3.*: Shows a scheme for communication with the client, in the sending of promotions, coupons, savings cheques and/or communications through http connection with the server element.
- *FIG4.*: Shows a scheme for the client's transaction at a point of sale, in a separate application from the checkout system.
- *FIG5.*: Shows a scheme for the client's transaction at a point of sale, in an application connected to the checkout system of the commercial premises.

### Preferred embodiment of the invention

As already indicated, the customer loyalty via mobile phone system comprises a client application, installed in the client's mobile phone and a server element in charge of sending updates and commercial data to clients.

The client application, which in a practical embodiment is provided in several versions (depending on the operational systems of the different mobile phones covered by the same) installed in the client's mobile phone and compatible with most mobile terminals, is installed in the client's mobile phone in three different ways:
(i) A first way involves in stallation via GPRS or 3 G wherein the mobile terminal itself downloads the application and proceeds to its installation. To this end, the mobile terminal must be correctly configured in order to make a GPRS or 3G connection. These connection data are usually already included in the terminal itself, or can be ordered from the different telephone providers. T o start the download an d installation of the application, the user must access a website from their mobile terminal, from where it will pass the deployment site filter before starting the download of the application. The function of the deployment site is simply to identify the type of mobile terminal connected and, depending on the type of terminal, facilitate one of the different versions of client application existing. Once the corresponding application is selected, the client makes the connection with the application server, accepts the download and starts up the latter for its subsequent installation.
(ii) A second way is installation through SMS messages to a short number wherein the application server will return a short message with the link to the website (deployment site) to which they must connect in order to download the application, as in the previous case. In order to start downloading and installing the application, the client accesses the website where the application corresponding to their mobile terminal will be downloaded. Once the client makes the connection with the server and accepts the installation of the client application, the download and installation will commence.
(iii) A third way is installation by means of a USB (Universal Serial Bus) through a communications port with a personal computer, which has previously downloaded the most appropriate application for their mobile terminal from the server via the internet; once the application is downloaded to the PC, it can be copied to the mobile device by means of a USB cable.
(iv) A fourth way is to download the client application through a Bluetooth connection, where the user, once inside the trading premises, enables their mobile Bluetooth device in order to allow the Bluetooth aerial located in the premises to detect them and send them the client application by SMS, once the client has sent their authorisation for the application to be downloaded.

### Client application:

The client application, in its non-exclusive preferred embodiment, is available in several versions in order to cover the greatest possible number of mobile operating systems existing on the market. The different versions will be installed in the client's mobile terminal after passing through the filter of the deployment site (website) which redirects the most appropriate version for each type of platform (e.g. iphone, android, Rim, java, etc.). The client application is compatible with most mobile phones, and is configured to allow the download of numerous promotions via i) silent SMS messages, that is, non-invasive messages, as they are not redirected to the mobile phone inbox and do not demand the user's attention or ii) by means of a query to the server element via http connection.

The client application displays on the telephone manually, as a result of direct action by the user, and automatically, as a result of a notification sent from the server element prior acceptance by the client, and is made up of the following functions:
(a) Identification of the user by means of a unique card number, preferably in 2D barcode format, wherein the function of the said code is the identification of the user in the trading premises, enabling analysis of the purchasing habits of each client in the registration of their visit to the abovementioned trading premises;
(b) An inbox with the commercial promotions and savings cheques sent by the trading premises to the client, wherein the said promotions and savings cheques sent can only be exchanged once, and have a given period of validity, the said promotions and savings cheques being removed from the inbox once used and/or the promotion has expired; and wherein, in order to obtain a savings cheque, the client will need to spend *x* euros in a given trading premises, where for every *x* euros spent, *n* points will be stored in their client account; the said savings cheque will be sent to the client every *t* period of time;
(c) An inbox of direct communications with the client sent by the trading premises to the client, wherein said communications will be commercial communications, and have a given period of validity, said communication being removed from the inbox once the period of communication has expired.
(d) A section for updating the client's personal data, e.g. name, surname, telephone number, postal code, reference premises, etc.
(e) A section for updating the application which allows the most recent version of the same to be downloaded.
(f) Other sections such as, for example, Help, which contains a list of the most frequently asked questions and general questions or on the customer loyalty program, etc.

At all times, the user will be entitled to know the balance of the points accumulated and decide the number of points they wish to exchange. Likewise, the client will be entitled to update the version of the client application and/or consult Help for the said client application.

Last of all, it is worth mentioning that the client application must be enabled before its use, because it is the only way to exchange information from the loyalty card in the client application with the client database. Consequently, once the application is installed in the mobile terminal, the user will need to complete the form below:
- Name.
- Surname/s.
- Postal Code.
- Mobile telephone
- Other data that can be added, such as email address, reference premises, birthday, etc.

The said form will be transmitted either by: i) the client application sending a SMS to the client database, storing the said information in the server element, or ii) connecting with the server element via http connection and storing said information.

### Server application:

The server application is a web application from where the trading premises itself can integrally manage the mobile customer loyalty card or client application, the client database and the applications server.

Thus, the client application download data are managed from the server application, said download data comprising: the list of telephones that have requested the download of the application, and the date of the request; the list of telephones that have downloaded the client application and have activated the card and the date of activation; and the list of telephone numbers pending activation of the card.

The client database comprises a series of client data such as name, surname/s, postal code, mobile phone number and loyalty card number, where, in the case of each client, the relevant information on the same is displayed, including the download date of the application, the activation date of the card or client application, the number of visits to the trading premises, that is, the number of times that the card or client application has been used, the number of promotions received, the number of promotions redeemed, the number of bonuses/rewards redeemed, the number of savings cheques received, the number of communications received, the trading premises visited in the event that the card is scanned in different premises, and the number of requests for the balance.

Furthermore, once the server application is connected to the client checkout system, the client database allows for the storage of the client purchasing data, which includes the purchase date, the trading premises visited, the list of products purchased, the total price of the purchase, the products on promotion purchased, etc

The management and control of the promotions is likewise carried out from the server application, where as many promotions as considered opportune can be created. The system will request the following data for the launch of a promotion:
- *Id promotion:* the system will automatically assign an *id promotion.*
- *Title_promotion:* it is the title that will display in the promotions inbox, preferably with a maximum of 16 characters.
- *Code_Promotion:* it is the code which each promotion must carry as a reference.
- *Date_start:* start of promotion date.
- *Date_end:* end of redemption date
- *Text_description:* it is the text that will display on accessing promotion details.
- *Text_printing*: it is the text required for the printed receipt.

It must be pointed out that once a promotion has been created, the target of the promotion must be chosen with the aid of a filter. This can be either by client, by trading premises, by group of trading premises, by postal code, by city, by date, by number of points and other criteria requested by the company contracting the service.

Another point to be taken into account is the management and control of the bonuses or prizes, as the trading premises will be entitled to create Bonuses/Prizes/Promotions in the premises itself, as a means for promoting the loyalty of their customers. When creating prizes, the system will request:
- *Id_prize:* the system will automatically assign an id_prize
- *Code_Promotion:* it is the EAN13 which each promotion must carry as a reference.
- *Date_start:* prize start date.
- *Date_end:* prize end date
- *Text_description:* it is the descriptive text of the prize created.
- *Text_printing*: it is the text required for display on the printed receipt.

Once a prize is created, the delivery method must be selected. This may be (i) for the number of scans a day, where a prize is given whenever a client scans N days, N times their mobile card, that is, the client application; or (ii) for the number of hours a day and while the stock of prizes last, where a prize is given to X clients who, after a given time, on a given day, scan their client application mobile card; iii) for frequency, e.g. at a given time/day or for the number of total or relative frequencies in a period; iv) random; v) for points accumulated, e.g. to all clients with more than x points; vi) other systems that can be created...

The management and control of the savings cheque can proceed from this point with the registration and sending of the savings cheques. The system will request the following data to launch the promotion:
- *Id_Cheque_Savings:* the system will automatically assign an identifier for each savings cheque created.
- *Value_Cheque:* it is the value that will be given to each savings cheque (in euros).
- *Title Cheque:* it is the title that will display in the client application's savings cheque inbox, preferably with a maximum of 16 characters.
- *Code_Cheque:* it is the code that each savings cheque will need to carry as a reference.
- *Date_start:* date from when the cheque can be redeemed.
- *Date_end:* redemption end date.
- *Text_printing*: it is the text required for display on the printed receipt.

Once the savings cheque has been created, aspects like how often and to whom it will be sent need to be defined.

Management and control of the communications is likewise carried out from the server application, where as many communications as are deemed opportune can be created, the following data being requested:
- *Id Communication*: the system will automatically assign an id_communication.
- *Title_Communication*: the title that will display in the communications inbox.
- *Text_Communcation*: the descriptive text of the commercial communication, which will display when you access communication details.
- *Date_End*: the date on which the communication will be removed from the communications inbox.

Each one of the commercial premises or establishments implementing the invention system will be fitted with numerous scanners which will be controlled by the server application and which can be grouped depending on their location for enabling the promotions and prizes to be sent. Similarly, the premises in which the scanners are installed for reading the client application mobile loyalty card will be controlled.

The working of the system and the method subject of the invention, in a practical embodiment, is as follows:

In the first place, the client application must be downloaded by the user, as has already been pointed out. Subsequently, the activation form must be completed, as has already been mentioned, for the system to store client information in the database, subsequently sending to the client application the new configuration together with the initial promotion.

Once they have visited a trading premises implementing the system, clients will need to identify themselves in a scanner provided for this purpose (at the check-out itself or in a kiosk created to this end), their code being scanned and the visit made being registered in the client database, and wherein, for each *x* visits, the client will receive a bonus as a loyalty prize. This bonus can be in the shape of a programme of points or another type of bonus.

The identification of the client and the uploading of information to the client database can occur in two different ways: i) by scanning the client code and/or ii) exchanging a promotion or discount coupon.

In the second case, the exchange of the promotion or discount coupon will have two functions: i) to validate the promotion/coupon, and/or ii) identify the client through promotional code sent, because both kinds of information are included in the scanned code.

The client receives a series of promotions for variable time periods, preferably weeks, in their client application, wherein, for the redemption of said promotions, the client must scan the promotional code either in the checkout scanner, the value of the promotion being directly discounted, or at a station or kiosk, where the code will be scanned and a discount coupon or voucher which is exchangeable at the checkout will be printed. Once the promotional code is scanned, the system will record the redemption of the promotion together with the data of the purchase made and the visit made in the client database.

The savings cheque, a result of the amount of bonuses stored in their balance, receiving in exchange a savings cheque worth *x* euros, and wherein, for the redemption of the these cheques, the client must scan the code identifying them once they have made a purchase, in the scanner located next to the checkout or with the coupon printed by a kiosk located for the said purpose in the premises. As occurs in the case of the promotions, once the savings cheque code is scanned, the system will record the redemption of the said savings cheque together with the data of the purchase made and the visit made in the client database.

For the system and method to work correctly, two important aspects of the invention must be kept in mind; on the one hand, the format of the messages, which must be specific for communication between the client application and the server, and secondly, the fact that all the messages must have a CRC check or error detection function with at least two control digits in each of the messages created. Following the same dynamics, and with respect to the safety of the client application version with connection to the server element via http connection, the communication between the client application and the server element will be made by means of a safe connection and a CRC check or error detection function with at least two control digits in each of the communications between the client application and the server.

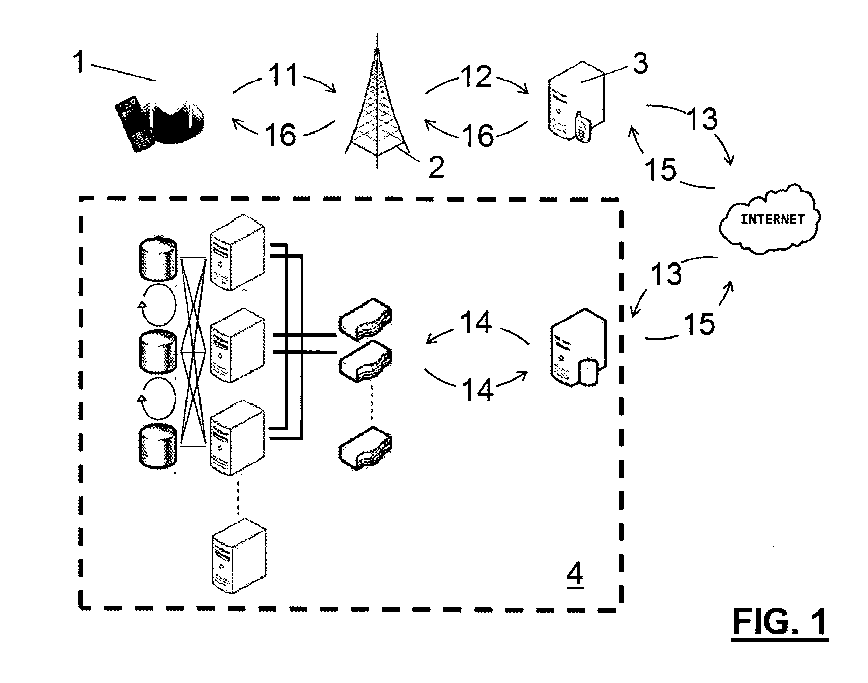

With respect to the attached figures, which show a practical embodiment of the invention, and more specifically with respect to **figure 1**, the scheme for communication with the client in the case of a request for download and for registration of the application is shown. The said process comprises, at least, the following stages:
**(i)** In the first stage, having downloaded the application, the user (1) registers (11) from their mobile terminal, subsequently sending the information on the registration (12) to the SMS (3) platform from the mobile operator (2);
**(ii)** In a second stage, the SMS (3) platform connects (13) to the system, which is based on a series of clusterised, redundant servers, with high availability (4) and checks the information received; if the information is correct,
**(iii)** It creates a new user profile (14), creating a unique client code;
**(iv)** In a fourth stage, the system connects (15) to the SMS (3) platform to send a message to the user with the data of their new card; and
**(v)** In a sixth stage, last of all, the user (1) receives (16) the data on their new account in their mobile phone together with an initial promotion.

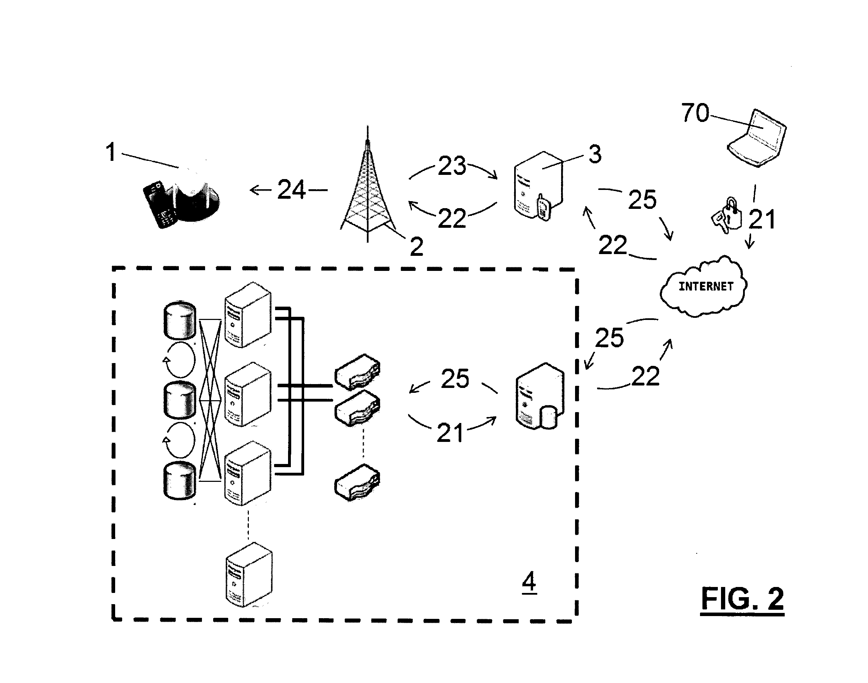

**Figure 2** shows the process of communication with the client, in the sending of communications. In a first stage, the request is made (21) on the part of the application manager managing the system (70) for sending a communication (promotion, communication, coupon, savings cheque and balance) to a database of users previously registered. The said request is carried out through the internet using a safe connection, and previously authenticating the user manager in the system.

At a second stage, the system processes the request (22) against the SMS platform (3) for sending the SMS messages through the mobile operator (2), and wherein the said SMS platform (3) stores (23) all the registrations generated following the sending of the SMA messages.

At a third stage, the user (1) receives (24) the communication, storing the information sent in the application installed in their mobile terminal. Last of all, the SMS platform (3) sends (25) the information registered following the sending of the SMS messages to the system with an aim to obtaining the data corresponding to the delivery confirmations

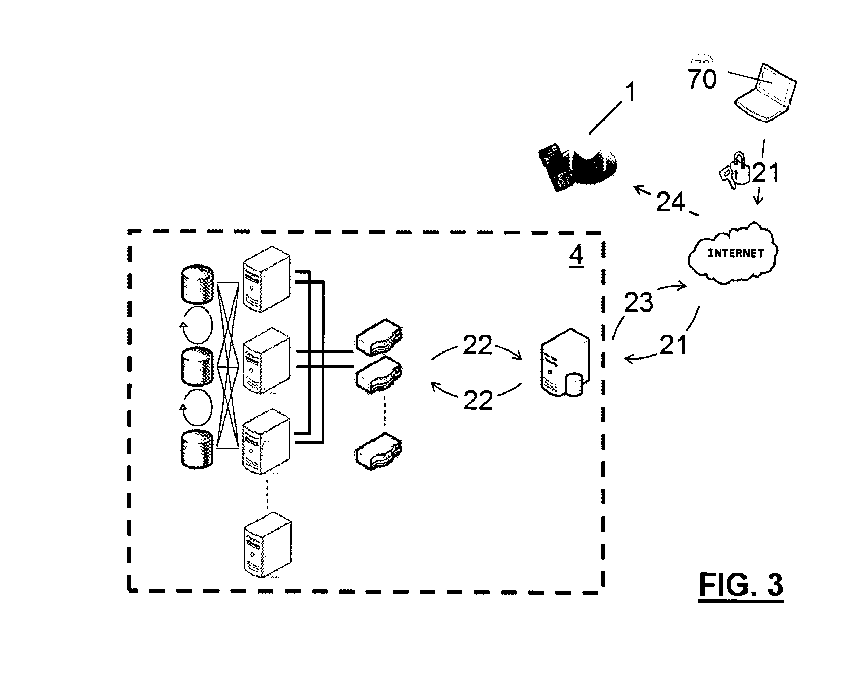

**Figure 3** shows the process of communication with the client, in the sending of communications (promotions, communications, coupons, savings cheques, and/or balance). At a first stage, the request is made (21) on the part of the application manager managing the system (70) for generating and updating the system, for reception by mobile client applications installed in the mobile devices of previously registered users. The said request is carried out through the internet using a safe connection, and previously authenticating the user manager in the system.

At a second stage, the system processes the request (22) and stores the necessary information (4) for when the mobile client application (1) connects to the system (4) over http, gathers and stores (23) all the new registrations generated following the request made by the manager.

At a third stage, the user (1) receives (24) the communication, storing the information in the client application installed in their mobile terminal. The reception is done automatically and periodically by the mobile client application and is called status **synchronisation.** If, on carrying out the synchronisation, the mobile client application does not find any change in the system, nothing will be stored. Once the status synchronisation of the mobile client application is completed, the necessary registrations are generated in the system with an aim to having data collection and statistics, both relating to the mobile client application and the status synchronisations in the system.

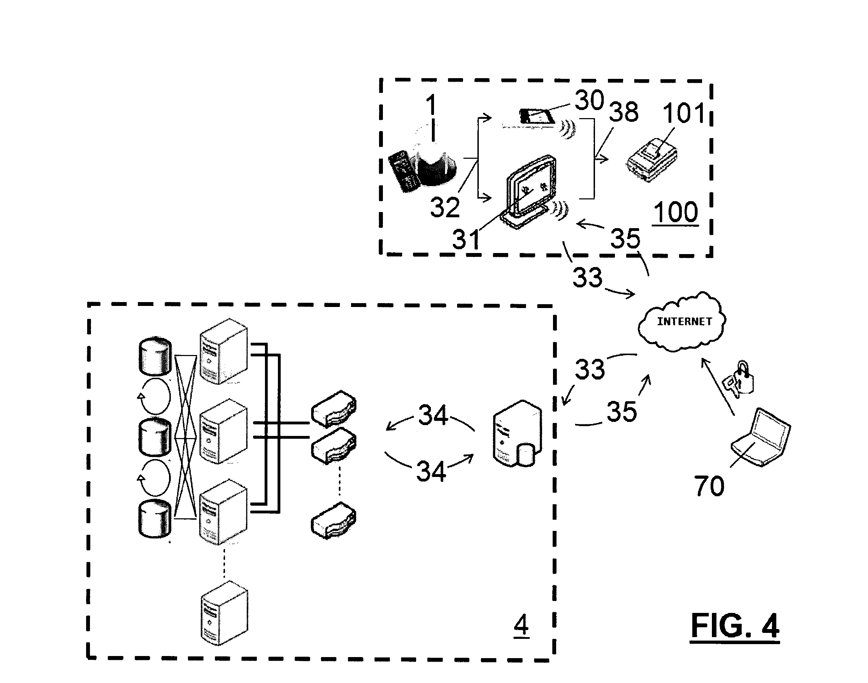

**Figure 4** shows the scheme for the client's transaction process from a point of sale in a separate application from the checkout system of the trading premises. Said process comprises a first stage involving the registration and management of the discount coupons (promotions, coupons and communications) in the database (70).

In a second stage, the user (1) presents the discount code (32) or the unique client code at the point of sale (100), the information being processed by means of the scanner provided for this purpose, a PDA (30), a kiosk (31) or other similar element.

This scanner (30, 31) connects (33) with the server element (4) by means of a safe internet connection, to verify the scanned code (user code, promotion code or coupon code), the said server element (4) being in charge of processing the transaction and updating (34) user information (1) such as the discount code, and the updating of the user balance.

At another stage of the process, the PDA (30) or the kiosk (32) receives the response from the system (35) with the validated information, finalises the transaction (36), and prints a receipt (38) on the printer (101) or requests data on the purchase made.

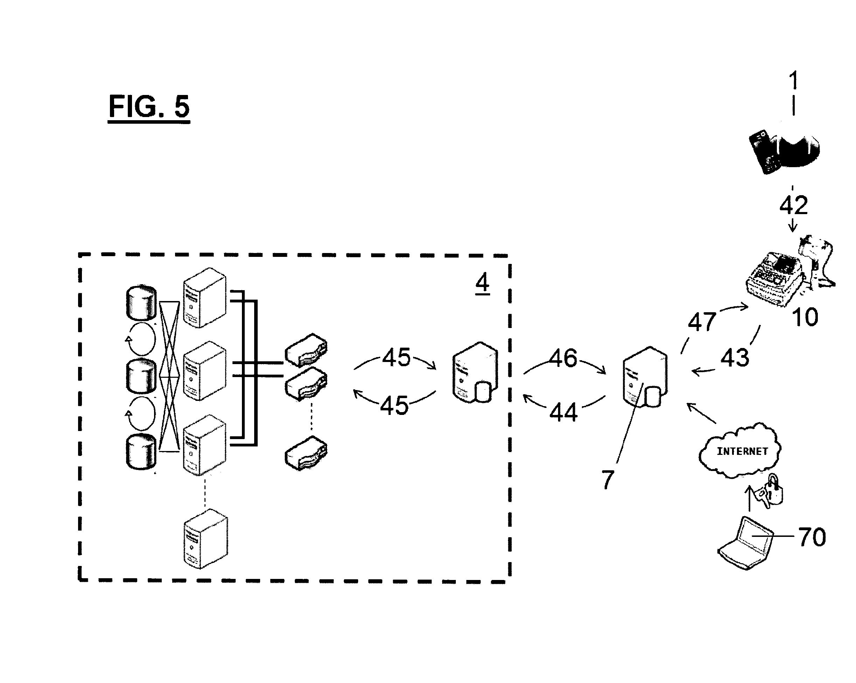

Last of all, **figure 5** illustrates the process of the client's transaction at the point of sale with the application connected to the trading premises' check-out system. Thus, a first stage involves the registration and management (70) of the discount coupons (promotions, coupons and communications) in the database.

At a second stage, the user (1) presents the discount code or the unique client code (42) at the point of sale, where the information is processed with the aid of a scanner (10) provided for this purpose.

From the point of sale (43) the processed information is sent for its verification to the client server (7'), which connects (44) to the server element and checks the code type scanned and its transaction (45) (user code, promotion code or coupon code), processing the transaction and updating user information such as, for example, the redemption of the promotion and/or coupon, the update of the user balance, or the storage of the processed information.

Lastly, the server element sends (46) the validation of the processed information to the point of sale through the client server (7') which connects (47) to said point of sale with the validated information, terminating the transaction and proceeding to the discount or accumulation of the new balance.

## Claims

1. Customer loyalty system via mobile phone comprising a client application, installed in the client's or user's mobile phone and a server element in charge of storing and validating the transactions made by the client as well as controlling, managing and sending updates and commercial data to the abovementioned clients or users, together with numerous scanners located in shopping centres enabled for the use of the system **characterised in that**
the client application is installed in the user's mobile phone, and configured to identify the client or user, for the accumulation of points and to allow the loading of numerous promotions and/or offers through i) non-invasive SMS messages that are addressed to the application itself installed in the client's telephone and not to the SMS inbox or ii) through a query to the client server in a http connection, both options comprising means to identify the user by means of a unique card number and means for loading promotions and/or savings cheques in a given shopping centre;
wherein the server element is configured to integrally manage the mobile customer loyalty card or client application, the client database and the server of the said client applications for its download to the mobile phones of the clients or users of the system;
the system being configured so that the client, having entered the trading premises implementing the system, will need to identify themselves in a scanner provided for the said purpose, their code being scanned, and the visit made being registered in the client database, and wherein, for each *x* visits and/or purchases, the client will receive a bonus.

2. Customer loyalty system in accordance with claim 1 **characterised in that** the client application is installed in the client's mobile phone in one of the following ways:
the first is installation using GPRS or 3G where the mobile terminal itself downloads the application from the applications server and proceeds with its installation, accessing a website where the application will be downloaded, and where, once the client makes the connection with the application server and accepts the download, the latter will start the subsequent download;
the second is by means of installation using SMS messages to a short number, where the application server responds with a short message containing the link of the website to which they will need to connect to download the application; a s in the previous case, in order to start the download and installation of the application, the client will need to access the website where the application will be downloaded; once the client makes the connection with the server and accepts the installation of the client application, the download and installation will start;
a third way is installation by means of a USB via a communications port with a personal computer which has previously downloaded the server application via the internet; once the application has been downloaded to the PC, it can be copied to the mobile device by means of a USB cable; and
a fourth way is by means of a Bluetooth connection, where the user, once inside the trading premises, enables their mobile Bluetooth device in order to allow the Bluetooth aerial located in the premises to detect them and send them the client application by SMS, once the user's authorisation has been received.

3. Customer loyalty system in accordance with claims 1 and 2 **characterised in that** the application displays on the telephone manually, as a result of direct action by the user, and automatically, with or without the client's authorisation.

4. Customer loyalty system in accordance with claims 1 to 3 **characterised in that** in the client application, identification by means of a unique card number, (preferably in 2D barcode format), allows information to be uploaded to the server, where the function of the said code is the identification of the user in the trading premises, enabling analysis of the purchasing habits of each client in the registration of their visit to the abovementioned premises.

5. Customer loyalty system in accordance with claims 1 to 4 **characterised in that** in the client application the means for loading commercial promotions comprise an inbox for commercial promotions and savings cheques sent by the trading premises to the client (preferably in 2D barcode format), allow information to be uploaded to the server element for its subsequent validation, where said promotions/savings cheques sent can be exchanged once only, and with a given validity term, said promotion/discount coupon being removed from the inbox once used and/or the promotion/discount coupon expired; and where, in order to obtain a savings cheque, the client will need to spend *x* euros in a given trading premises, where for every *x* euros spent, *n* points will be stored in their client account; the said savings cheque will be sent to the client every *t* period of time.

6. Customer loyalty system in accordance with claims 1 to 5 **characterised in that** in the client application the means for loading the communications comprise an inbox of direct communications with the client sent by the trading premises to the client, whereby the said communications will be commercial communications, and have a given period of validity, said communication being removed from the inbox once the period of communication has expired.

7. Customer loyalty system in accordance with claims 1 to 6 **characterised in that**, in the client application, the means for updating the client's personal data comprise a section from which the client will be able to modify their personal data (name, surname, postal code, mobile phone number, email address, etc) at any time, by i) sending by the client application of an SMS message to the client database with detailed information or ii) connection of the client application to the server element via http connection and storing said information.

8. Customer loyalty system in accordance with claims 1 to 7 **characterised in that** in the client application the means for updating the new versions comprise a section for updating the client application which allows the most recent version to be downloaded through a connection with the server

9. Customer loyalty system in accordance with claims 1 to 8 **characterised in that** in the client application the Help means comprise a section from which the client will be able to consult a list of frequently asked and general questions on the client application, the customer loyalty program, reception of information in said application and the redemption system, etc.

10. Customer loyalty system in accordance with foregoing claims **characterised in that** the client application needs to be enabled because it is the only way to exchange information from the loyalty card in the client application with the client database, the user being obliged to submit the following data: name, surname/s and postal code, or other data considered relevant (e.g. email address, reference premises, city, etc.) the client application i) sending an SMS message to the client database, storing the said information in the server element, or ii) connecting with the server element via http connection and storing the said information.

11. Customer loyalty system in accordance with claim **characterised in that** the server application manages the client application download data, said download data comprising: the list of telephones that have requested the download of the application, and the date of the request; the list of telephones that have downloaded the client application and have activated the card and the date of activation; and the list of telephone numbers pending activation of the card.

12. Customer loyalty system in accordance with claims 1 and 11 **characterised in that**, in the server application, the client database comprises a series of client data such as the name, surname/s, postal code, mobile phone number and customer loyalty card number, as well as others considered relevant in each project, wherein, in the case of each client, the relevant information on the same is displayed, including the download date of the application, the activation date of the card or client application, the type of card downloaded (SMS vs. http connection), number of visits to the trading premises, that is, the number of times that the card or client application has been used, the number of promotions received, the number of promotions redeemed, the number of bonuses/rewards redeemed, the number of savings cheques received, the number of communications received, the trading premises visited in the event that the card is scanned in different premises, and the number of requests for the balance. Where the checkout system allows for it, even the particulars of the purchases can likewise be displayed, as in a standard CRM.

13. Customer loyalty system in accordance with claims 1, 11 and 12 **characterised in that** each one of the trading premises implementing the system will have numerous scanners which will be controlled by the server application and be grouped depending on their location for enabling the promotions and prizes to be sent. Similarly, the premises in which the scanners are installed for reading the client application mobile loyalty card will be controlled.

14. Customer loyalty system via mobile phone, implemented in system of claims 1 to 13 **characterised in that** it comprises the following stages:
a first stage involving the download of the client application by the user, the completion of the activation form so that the server can store client information in the client database, and subsequently send the new configuration to the client application together with the initial promotion;
when entering a trading premises implementing the system, they will need to identify themselves in a scanner provided for the said purpose, their code being scanned in the scanner located at the check-out, or at a station or kiosk, the visit made being registered in the client database, and wherein, for each *x* visits, the client will receive a bonus as a loyalty prize;
the client receives a series of promotions for variable time periods, preferably weeks, in their client application, wherein, for the redemption of said promotions, the client must scan the promotional code either in the checkout scanner, the value of the promotion being directly discounted, or at a station or kiosk, where the code will be scanned and a discount coupon or voucher which is exchangeable at the checkout will be printed; and
wherein the savings cheque, a result of the amount of bonuses accumulated in their balance, receiving in exchange a savings cheque worth *x* euros, and wherein, for the redemption of these cheques, the client will need to scan the code that identifies them once they make a purchase, in the scanner located at the check-out or with a coupon printed by the kiosk located for this purpose in the premises.
and wherein the client receives a series of commercial promotions for variable time periods, preferably weekly, in their client application.
